# EUROPEAN PATENT APPLICATION

(11) **EP 2 386 599 A1**
(43) Date of publication of application: **16.11.2011**
(21) Application number: 11154005.0
(22) Date of filing: 10.02.2011
(51) Int. Cl.: C08K 5/18

(54) **Epoxy curing compositions and methods**

(30) Priority: 30.04.2010 US 330171 P
(71) Applicant: Cognis IP Management GmbH, 40589 Düsseldorf (DE)
(72) Inventor: Shah, Shailesh, Dresher, PA 19025 (US); Polykarpov, Alexander, Lansdale, PA 19446 (US); Natesh, Anbazhagan, North Wales, PA 19454 (US); Ananthachar, Sudhir, Hillsborough, NJ 08844 (US)

(57) **Abstract**

Disclosed are accelerator /curing agent compositions comprising (a) at least one aromatic or alicyclic compound containing at least two amine moieties, such amine-containing aromatic or alicyclic compound(s) preferably having from 3 to 5 amine hydrogens per compound and preferably two primary amines per compound, (b) at least one aliphatic compound containing at least two amine moieties, such compound(s) preferably having from 2 to 4 amine hydrogens per compound and one primary and one secondary amine per compound, and (c) at least one non-reactive catalytic compound, preferably having no amine hydrogens.

## Description

### FIELD OF THE INVENTION

This invention relates to compositions for accelerating and/or curing epoxy resins, and to curable compositions and methods containing and/or using such accelerating and/or curing composition.

### BACKGROUND OF THE INVENTION

Epoxy resins have been long known to be useful in many important applications, including as adhesives and coatings. The effectiveness of such materials for particular uses is determined, in significant part, by the characteristics associated with such materials as part of the process of curing such compositions. Several processing parameters can be used to influence the rate of cure of the epoxy formulations. However, frequently countervailing factors militate against the use of many of these processing parameters. For example, it is possible to cure epoxy resins at a faster rate by increasing the temperature of the cure. However, use of this technique is often impractical because of the temperature sensitivity of the substrates with which the epoxy is associated and/or because of outdoor seasonal applications. It is also possible to increase the average functionality of the epoxy resin system. However, this frequently has the disadvantageous effect of increasing the brittleness and possibly negatively influencing other factors.. It is also possible to change the reactivity of the curing agent and accelerators used in the epoxy system in order to adjust the rate of cure and the properties of the finished product. However, great care must be taken when adjusting these parameters in order to achieve the desired results.

Likewise, it is also complicated and difficult to make adjustments to the components of a curable epoxy system, having known cure rates, pot life and finished product properties. This difficulty is compounded if it is desired to make a change in one or more components without changing the cure rate and/or other characteristics and properties of the both the reactive and finished system. In this regard, the type and nature of curing agents and/or accelerators used in a reactive epoxy system have a significant impact on the curing characteristics of curable epoxy systems.

One accelerator/curing agent which has been commonly used to achieve satisfactory curing of epoxy resins is N-aminoethylpiperazine ("AEP"). For example, polyamine curing agents, particularly polyoxyalkylene polyamines, are frequently accelerated using AEP and/or AEP in combination with other accelerants. AEP is somewhat unique in that it reacts with most epoxy resins much more quickly than many other amine curing agents, especially at moderate ambient temperatures (e.g. "room temperature").

Applicants have come to appreciate a need for compositions which can be effectively used to replace AEP, preferably as a "drop-in replacement," in those systems in which AEP has been used as an accelerant and/or curing agent. This need has arisen, at least in part, as a result of shortages of AEP and/or because of the cost associated with such material. Furthermore, because of the relatively unique properties of AEP, many curable epoxy formulations that use AEP have been tailored to achieve certain performance properties based on the impact of AEP on the system. One element of such performance optimization is, as a general rule, to use of AEP in an amount that achieves a stoichiometric ratio of about 1:1 amine hydrogen to epoxide groups (sometimes referred to herein as "1:1 equivalent ratio" for convenience). The use of such a 1:1 equivalent ratio ensures maximum stability of the product when the curable components are fully reacted, as will be understood by those skilled in the art. For example, systems which are substantially off the 1:1 stoichiometry may, in certain circumstances, lead to lower modulus, and/or a lower glass transition temperature of the cured material. Also, resistance to solvents or moisture may also be decreased with such "off stoichiometry" systems.

Proposals have been made to develop substitutes for AEP that can serve to accelerate the curing reaction of slower amine curatives. For example, US Patent 6,946,503 describes a blend comprising 4-(3-aminopropyl)morpholine ("APM") and 2-(2-aminoethylamino)ethanol ("AEEA") as a substitute for AEP. The blend is described as preferably comprising AEEA in an amount of 62.60% by weight based upon the total weight of the blend, and APM in an amount of 37.40% by weight based upon the total weight ofthe blend. The patent describes substituting this blend on an equal weight basis with AEP and in such a way as to provide the combination with an AHEW which is the same as AEP, namely, 43.07 grams per amine hydrogen equivalent. Although applicants have recognized that there is an advantage to providing a replacement formulation that can be substituted on an equal weight basis with AEP, applicants have also recognized that there are disadvantages associated with formulations of the type suggested in US Patent 6,946,503. For example, applicants have come to appreciate the need for a composition which is a ready replacement for AEP, and which, when used in a 1:1 stoichiometric ratio, produces a curable system having substantially the same curing properties, including preferably gel time, and also preferably substantially the same cured properties, as the system when AEP is used. Moreover, applicants have recognized the need for a curing agent and/or accelerant that does not have some of the disadvantages associated with the use of APM.

### SUMMARY OF THE INVENTION

Applicants have developed compositions that are effective as curing agents and/or accelerating agents for a curable epoxy resins, and curable epoxy resin systems containing such compositions. The compositions of the present invention are effective and desirable on their own basis as curing agents and/or accelerating agents. For example, the preferred compositions ofthe present invention are capable of providing relatively fast curing of epoxy resins even at low or ambient temperature conditions. In such preferred systems, the accelerator/curing agent composition comprises (a) at least one aromatic or alicyclic compound containing at least two amine moieties, such amine-containing aromatic or alicyclic compound(s) preferably having from 3 to 5 amine hydrogens per compound and preferably two primary amines per compound, (b) at least one aliphatic compound containing at least two amine moieties, such compound(s) preferably having from 2 to 4 amine hydrogens per compound and one primary and one secondary amine per compound, and (c) at least one non-reactive catalytic compound, preferably having no amine hydrogens. Applicants contemplate that the curing agents and/or accelerating agents of the invention can be used to advantage with all types of epoxy resins and in all amounts and relative proportions.

Certain preferred aspects of the present invention provide compositions having particular advantage as replacements for AEP in any and all of the curable epoxy systems in which AEP is now used. More particularly, applicants have developed compositions which are highly effective when used as replacements, and preferably 1:1 stoichiometry drop-in replacements, for N-aminoethylpiperazine in curable epoxy resin systems. It should be noted, as mentioned above, that the curable epoxy compositions of the present invention are not necessarily limited to the use ofthe present curing agents and/or accelerating agents in any particular amount or ratio. As used herein, the terms "1:1 stoichiometry drop-in replacement," "1:1 stoichiometry," and "1:1 stoichiometric ratio," and the like mean curative systems and/or uses of curative system in which the ratio is from about 0.85:1 to about 1:1.15. In certain preferred embodiments, the compositions and systems ofthe present invention have a stoichiometric ratio of from about 0.9:1 to about 1:1.1, and even more preferably of from about 0.95:1 to about 1:1.05 In such preferred systems, the accelerator/curing agent composition comprises (a) at least one aromatic or alicyclic compound containing at least two amine moieties, such amine-containing aromatic or alicyclic compound(s) preferably having from 3 to 5 amine hydrogens per compound and preferably two primary amines per compound, (b) at least one aliphatic compound containing at least two amine moieties, such compound(s) preferably having from 2 to 4 amine hydrogens per compound and one primary and one secondary amine per compound, and (c) at least one non-reactive catalytic compound, preferably having no amine hydrogens. Applicants have found that the use of these three components in combination enables the development of curing agent and/or accelerant compositions which, when incorporated in epoxy resin systems preferably in a 1:1 stoichiometric ratio, are able to closely match the curing properties that such systems exhibit when using AEP in a 1:1 stoichiometric ratio.

In preferred embodiments the compositions of the present invention are formulated such that the relative amounts of each of components (a), (b) and (c) produce an amine hydrogen equivalent weight (AHEW) of from about 40 to about 46, more preferably from about 42 to about 44.5, and even more preferably from about 42.5 to about 43.5. In certain highly preferred embodiments, the relative amounts of each of components (a), (b) and (c) produce an AHEW of about 43.

In another aspect of the present invention, relatively fast reacting curable epoxy resin systems are provided. The preferred systems comprise, in addition to the epoxy resin component, a combination of (a) at least one diamine-substituted aromatic or alicyclic compound, such diamine-substituted aromatic or alicyclic compound(s) preferably having from 3 to 5 amine hydrogens per compound and preferably two primary amines per compound, and (b) at least one diamino aliphatic compound, preferably having from 2 to 4 amine hydrogens and preferably one primary and one secondary amine per compound, preferably in relative amounts such that the (a):(b) weight ratio in such curable epoxy resin systems is from about 2.5:1 to about 3.5:1.

In connection with the composition aspects of the present invention, the preferred compositions possess a highly desirable yet difficult to obtain combination of several properties, including particularly advantageous and desirable gel times for the epoxy systems in which they are incorporated, as well as advantageous physical properties for the cured system.

### DETAILED DESCRIPTION OF PREFERRED EMBODIMENTS

It is contemplated that the present compositions will find utility as curing agents and/or accelerants in any known curable epoxy resin system, and all such systems which utilize the present compositions are within the scope of the present invention. In certain preferred embodiments, however, the curable epoxy systems ofthe present invention comprise at least one polyepoxy, at least one polyamine, and a curing agent and/or accelerant composition according to the present invention.

It is contemplated that the compositions of the present invention can be adapted for effective use with essentially any of the currently known and available curable epoxy resin systems. Thus, the curable epoxy systems of the present invention include within their scope all curable epoxy resins, including but not necessarily limited to: diglycidyl ether of bisphenol based resins ("DGEB"), including Bis-A versions thereof ("DGEBA"); Bisphenol F epoxy; multifunctional epoxy, such as phenol epoxy novolac and cresol novolac; cycloaliphatic epoxies; brominated epoxies; and epoxy vinyl esters. In addition, the physical form of the resin can be any know type, including liquid epoxy resin, solid epoxy resin, solution epoxies and reactive diluent epoxies. Non-limiting examples of DGEBA resins that are useful in connection with the present invention include those resins sold by the Dow Chemical company under the following trade designations: D.E.R.-317; D.E.R.-324 (each ofwhich includes reactive diluents); D.E.R.-325 (which includes reactive diluents); D.E.R.-330; D.E.R.-332; D.E.R.-337; D.E.R.-362; D.E.R.-364; and D.E.R.-383. Other curable epoxy resin systems which are preferred for use in accordance with the present invention are described in US Patent 6,946,503, which is incorporated herein by reference. A highly preferred epoxy resin is sold under the trade designation D.E.R. 331 by the Dow Chemical Company.

Another epoxy resin system which is preferred in certain embodiment comprises the epoxy sold under the trade designation EPON, and especially EPON 828, by HEXION Specialty Chemicals. Thus, while it is contemplated that the curing agent compositions of the present invention may be used with all types of epoxy resins, including solid and powder grade resins, it is preferred in certain embodiments that the curing agent compositions of the present invention are utilized as a component of a liquid epoxy resin. In certain preferred embodiments, the liquid epoxy resin used in connection with the present invention has a viscosity (mPas measured at 25°C) of from about 10,000 to about 20,000, more preferably from about 11,000 to about 15,000, and even more preferably of from about 11,000 to about 14,0000. In certain embodiments the epoxy resin has an Epoxide Equivalent Weight (g/eq.) ("EEW") of from about 175 to about 200, more preferably from about 180 to about 200, and most preferably about 190.

As used herein, the term "aromatic or alicyclic compound containing at least two amine moieties" is used in its broad sense to refer to compounds which contain at least one aromatic ring and/or at least one saturated cyclic organic compound derived from corresponding C₄ through C₇ aliphatic compounds by ring formation and containing at least two amine moieties. As used herein, the term "containing at least two amine moieties" is used in its broad sense to describe to at least two amine moieties covalently bonded, either directly or indirectly, to one or more aromatic and/or alicyclic moieties. Thus, this term is intended to include an alicyclic compound having covalently bound thereto, at each of two separate locations, an amine and/or alkylamine group, wherein the alkyl portion of said alkyl amine is preferably a C₁ - C₃ group, preferably in certain embodiments a C₁ group. For the purposes of clarity, it is understood that the term alicyclic has the same meaning in the art as cycloaliphatic.

In certain preferred embodiments, the aromatic or alicyclic compound containing at least two amine moieties according to the present invention is as indicated in Formula I below:

X- ((Y)ₘ-NR₂)ₙ I

where
X is a monovalent or multivalent aromatic radical, including or not heteroatoms, or a monovalent or multivalent C₄ through C₇ non-aromatic ring, including or not heteroatoms,
each Y is independently a C1 - C38 saturated or unsaturated aliphatic radical, which may be halogen substituted, and preferably a monovalent, unsubtituted, non-cyclic aliphatic radical, each R is independently H or a C 1 - C4 saturated or unsaturated aliphatic radical, which may be halogen substituted, and preferably a monovalent, unsubtituted, non-cyclic aliphatic radical, , provided that at least two, and more preferably at least 3 of said Rs are H,
m is 0 or 1, and
n is 2 , 3, 4 or 5 and is equal to the valence of the X radical. In certain preferred embodiments each Y is independently a C 1- C8 saturated or unsaturated aliphatic radical. In certain preferred embodiments, when X is C₄ through C₇ non-aromatic ring, it does not include oxygen as a heteroatom, and even more preferably is does not include a heteroatom.

In certain preferred embodiments the compound according to Formula I comprises, and in certain embodiments preferably consists essentially of, diaminomethylcyclohexane, and even more preferably 1,3-bis-diaminomethylcyclohexane, as illustrated below.

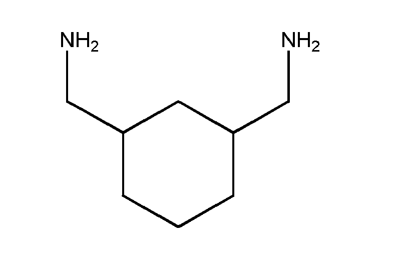

Of course those skilled in the art will appreciate that compounds containing indirect bonding to the amine group are included in the broad scope of the invention , and therefore the following types of compounds as illustrated in Formulas IA and IB are contemplated and illustrative: 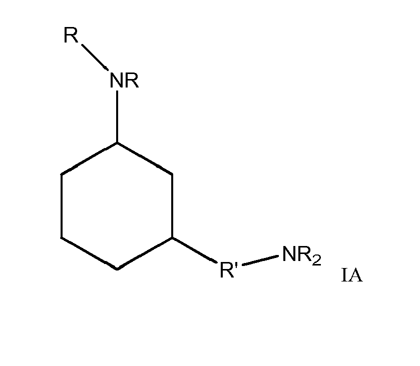 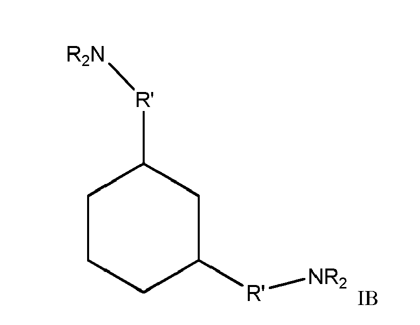 where each R is independently R is independently H or C 1- C4 saturated or unsaturated aliphatic radical, which may be halogen substituted, and preferably a monovalent, unsubtituted, non-cyclic aliphatic radical and each R' is independently a C 1 - C4 alkyl, provided that at least two and preferably at least three of said Rs are H.

In certain preferred embodiments the aromatic or alicyclic compound containing at least two amine moieties comprises, and in certain embodiments preferably consists essentially of, bis(aminomethyl)benzene, and even more preferably 1,3-bis(methylamino)benzene. In certain embodiments, it is preferred that the aromatic or alicyclic compound containing at least two amine moieties is selected from the group consisting of diaminomethylcyclohexane, diaminomethybenzene, and combinations of these.

As used herein, the term "at least one aliphatic compound containing at least two amine moieties" is used in its broad sense to refer to any aliphatic compound having at least two amine moities covalently bonded, either directly or indirectly to, to one or more aliphatic chains. According to certain preferred embodiments the aliphatic compound containing at least two amine moieties comprises an N-aminoalkyl-N-hydroxyalkyl amine. One such preferred compound as illustrated below in connection with Formula II. 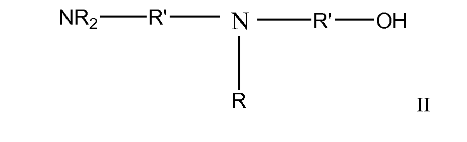 where each R is independently H or C1 - C4 saturated or unsaturated aliphatic radical, which may be halogen substituted, and preferably a monovalent, unsubtituted, non-cyclic aliphatic radical, provided that at least two and preferably at least three of said Rs are H, and each R' is independently a C1 - C4 alkyl.

It will be understood that the term "aliphatic," in its broad sense, can be any length and either straight chain or branched, and either saturated or unsaturated, and substituted or unsubstituted, and either monovalent, divalent or trivalent. Nevertheless, in highly preferred embodiments, the aliphatic compound containing at least two amine moieties of the present invention is comprised of one or more aliphatic chains, preferably two aliphatic chains having from one to about five carbon atoms, more preferably from about one to about four carbon atoms, and most preferably in certain embodiments two aliphatic chains having to two (2) carbon atoms each, with said chains each being bound to a amino group to produce an secondary amine and one of said chains being substituted, and preferably terminally substituted with -NH₂, thereby providing the compound with a primary amine, and the other of said chains being substituted, and preferably terminally substituted with a hydroxyl group. Thus, in certain preferred embodiments the diamino aliphatic compound comprises, and in certain highly preferred embodiments consists essentially of, aminoethylethanolamine (AEEA), as illustrated below.

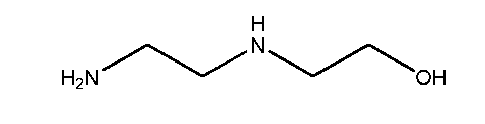

As used herein, the term "non-reactive catalytic compound" is intended in its broad sense to refer to any compound that catalyzes the cure of the epoxy resin but which does not participate stoichiometrically in the reaction. In view of the teachings contained herein, it is believed that those skilled in the art will be capable of readily identifying a large number of nonreactive catalytic compounds for use in accordance with the present invention, and all such compounds are within the broad scope of the present invention. In certain preferred embodiments, the non-catalytic compound comprises, and in certain embodiments consists essentially of, nonylphenol. Other examples of nonreactive compounds in accordance with the present are known to those skilled in the art.

As mentioned above, it is contemplated that the present compositions will find utility as curing agents and/or accelerants in any known curable epoxy resin system, and all such resin compositions and systems which utilize the present compositions are within the scope of the present invention. Furthermore, those skilled in the art will appreciate that other components may advantageously be included in the resident curing compositions and/or systems in accordance with the present invention. Thus, it is preferred in certain embodiments, that the curable epoxy systems of the present invention comprise, in addition to at least one polyepoxy and a curing agent and/or accelerant composition according to the present invention, one or more additional or supplemental curing agents or compounds. By way of nonlimiting example, it is contemplated that the epoxy compositions of the present invention include a additional curing agent selected from the group of aliphatic amines, cycloaliphatic amines, polyamides, amindoamines, aromatic amines, anhydrides and combinations of two or more of these.

### EXAMPLES

The invention is further illustrated in the following examples which are intended to be illustrative, but not limiting in any manner.

### Comparative Example 1

About 162.8 grams (hereinafter "g") of a liquid curable epoxy resin comprising the reaction product of epichlorohydrin and bisphenol A sold under the trade designation D.E.R. 331 by the Dow Chemical company is provided. A stoichiometric 1:1 equivalent of AEP (about 37.2 g of AEP) is added to the D.E.R. 331 and the gel time is measured according to standard procedures and found to be 15 minutes and 14 seconds.

### Comparative Example 2

About 168.3 grams of a liquid curable epoxy resin comprising the reaction product of epichlorohydrin and bisphenol A sold under the trade designation D.E.R. 331 by the Dow Chemical company is provided. A stoichiometric 1:1 equivalent of 1,3-bisaminomethyl cyclohexane (about 31.7 g of 1,3-BAC) is added to the D.E.R. 331 and the gel time is measured according to the same standard procedures as used in Comparative Example 1 and found to be 31.7 minutes and 14 seconds.

As can be seen from a comparison of Comparative Example 1 and Comparative Example 2, at the same 1:1 equivalent ratio, the curable epoxy resin system which utilizes AEP as a curing agent gels approximately twice as fast as the same system except with 1,3-BAC as the curing agent in a 1:1 equivalent ratio. This comparison demonstrates that substituting one amine for another, even at the same equivalent ratio, will not necessarily produce a system having the same or even similar to cure properties.

### Example 1

A composition in accordance with the present invention is prepared in accordance with Table 1 below:

**Table 1**

| Component | Weight, % |
|---|---|
| 1,3 BAC | 64.78% |
| AEEA | 20.14% |
| Nonylphenol | 15.08% |
| Total | 100.0% |

About 162.8 g of a liquid curable epoxy resin comprising the reaction product of epichlorohydrin and bisphenol A sold under the trade designation D.E.R. 331 by the Dow Chemical company is provided. A stoichiometric 1:1 equivalent of the composition made in accordance with Table 1 (about 37.2 g) is added to the D.E.R. 331 and the gel time is measured according to the same standard procedures as used in Comparative Example 1 and found to be 15 minutes. As can be seen from this result, the compositions of the present invention are capable ofproducing gel times that are substantially identical to the gel times produced utilizing the same curable epoxy resin system, and using the preferred 1:1 equivalent ratio and on an equivalent weight basis as the system of Comparative Example 1.

### Example 2

A composition in accordance with the present invention is prepared in accordance with Table 2 below:

**Table 2**

| Component | Weight, % |
|---|---|
| 1,3 BAC | 63.84 |
| AEEA | 21.31 |
| Versamine EH-50 | 14.85 |
| Total | 100.0% |

| | |
|---|---|
| * Versamine EH-50 is a curing agent sold by Cognis Company containing no amine hydrogens | |

About 162.8 g of a liquid curable epoxy resin comprising the reaction product of epichlorohydrin and bisphenol A sold under the trade designation D.E.R. 331 by the Dow Chemical company is provided. A stoichiometric 1:1 equivalent of the composition made in accordance with Table 2 (about 37.2 g) is added to the D.E.R. 331 and the gel time is measured according to the same standard procedures as used in Comparative Example 1 and found to be 15 minutes. As can be seen from this result, the compositions of the present invention are capable ofproducing gel times that are substantially identical to the gel times produced utilizing the same curable epoxy resin system, and using the preferred 1:1 equivalent ratio and on an equivalent weight basis as the system of Comparative Example 1.

### Example 3

This example illustrates the use of the present compositions to advantage as a drop-in replacement for AEP in an existing curable system. A composition in accordance with the present invention is prepared in accordance with Table 3A below by charging nonylphenol and the composition according to Table 2, instead of AEP, into a batch reactor equipped with stirrer, nitrogen inlet, thermocouple, and a condenser. The bisphenol A epoxy is added to the reactor with stirring and a nitrogen purge. The reactor contents are then heated under nitrogen blanket until a temperature of about 310°F is reached and then held for one hour with continuous mixing.

After one hour the reactor is cooled to about 140°F, and the N,N-dimethlbenzylamine and benzyl alcohol are added with continuous mixing while maintaining the batch at about 140 °F. The reactor contents are then cooled to about 120°F and discharged. The product from the reactor is checked for amine value, viscosity, and color and is found to be as reported in Table 3B below.

**Table 3A**

| Component | Weight, % |
|---|---|
| 1,3 BAC | 29.15 |
| AEEA | 9.06 |
| nonylphenol | 21.79 |
| Bisphenol A | 30 |
| N.N-Dimethylbenzylamine | 8 |
| Benzyl Alcohol | 2 |
| Total | 100.0% |

**TABLE 3B**

| | |
|---|---|
| Amine Value, mgKOH/g | 361.00 |
| Viscosity cP at 25 C | 5721 |
| Color -Gardner | 2 |

### Comparative Example 4

About 70 grams of the commercial curing agent sold under the trade designation Versamid 125 by Cognis Corporation is added to about 130 grams of Dow epoxy resin D.E.R. 331 and mixed for one minute and gel time is determined according to a standard procedure. The amount oftime it took the gel the mixture is recorded and found to be 2 hours and 6 minutes.

### Examples 4A - 4C

### Example 4A

About 65 grams of the composition of Example 3 is added to 135 grams of Dow epoxy resin D.E.R. 331 and mixed for one minute and tested to determine gel time using the same standard procedure used in Comparative Example 4. The amount of time it took the gel the mixture is recorded below in Table 4 as Example 4A.

### Example 4B

About 66.5 grams of the commercial curing agent sold under the trade designation Versamid 125 by Cognis Corporation, together with about 3.5 grams of the composition of Example 3, are added together to about 130 grams of Dow epoxy resin D.E.R. 331 and mixed for one minute and tested to determine gel time using the same standard procedure used in Comparative Example 4. The amount of time it took the gel the mixture is recorded below in Table 4 as Example 4B.

### Example 4C

About 63 grams of the commercial curing agent sold under the trade designation Versamid 125 by Cognis Corporation, together with about 7 grams of the composition of Example 4, are added together to about 130 grams of DOW epoxy resin D.E.R. 331 and tested to determine gel time using the same standard procedure used in Comparative Example 3. The amount of time it took the gel the mixture is recorded below in Table 4 as Example 4C.

**TABLE 4**

| | Gel time @ 25C, hours:minutes |
|---|---|
| Example 4A | 00:04 |
| Example 4B | 01:54 |
| Example 4C | 01:34 |

These results indicate that the compositions of the present invention can be used without any other co-curing agent or co-accelerant to effectively and rapidly cure resin compositions, or together with other co-curing agents or co-accelerants to effectively cure epoxy resins. More specifically, Example 4A demonstrates the ability of the present compositions, when used alone, to reduce gel time dramatically and unexpectedly faster than other commercially available cure and agents. Examples 4B and 4C demonstrate the ability of the present compositions to act as a co-curing agent and/or co-accelerant to substantially reduce the gel time of the compositions by replacing only a relatively a small portion of the commercially available curing agent/accelerant with the present compositions.

It is apparent that many modifications and variations of this invention as hereinabove set forth may be made without departing from the spirit and scope thereof. The specific embodiments are given by way of example only and the invention is limited only by the terms of the appended claims.

## Claims

1. Use of a composition comprising
(a) at least one aromatic or alicyclic compound containing at least two amine moieties and having from 3 to 5 amine hydrogens;
(b) at least one aliphatic compound containing at least two amine moieties and having from 2 to 4 amine hydrogens; and
(c) at least one catalytic compound having no amine hydrogens.
as an accelerator and/or curing agent in a curable epoxy resin system.

2. The use of claim 1 wherein the relative amounts of each of said components (a), (b) and (c) provides an amine hydrogen equivalent weight of from about 40 to about 46.

3. The use of claim 1 wherein said at least one aromatic or alicyclic compound (a) comprises a compound in accordance with Formula I:
X- ((Y)ₘ-NR₂)ₙ I
where
X is a monovalent or multivalent aromatic radical, including or not heteroatoms, or a monovalent or multivalent C₄ through C₇ non-aromatic radical , including or not heteroatoms,
each R is independently a C1 - C4 saturated or unsaturated aliphatic radical or H, provided that at least two of said Rs are H and
n is 2, 3 or 4.

4. The use of claim 1 wherein wherein said east one at least one aliphatic compound (b) comprises at least one compound in accordance with Formula II: 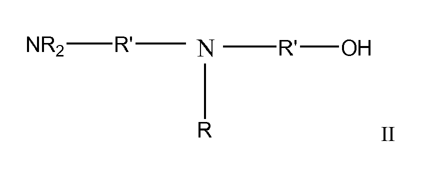 where each R is independently C1 - C4 alkyl or H and each R' is independently a C1 - C4 alkyl.

5. A curable epoxy composition containing the composition of claim 1.

6. The curable epoxy composition of claim 5 wherein said composition of claim 1 is present in the curable epoxy composition in an amount effective to form a stoichiometric equivalent ratio in the curable composition of from about 0.85:1 to about 1:1.15.

7. The curable epoxy composition of claim 5 having a gel time at 25°C of from about 10 minutes to about 20 minutes.

8. The composition of claim 5 wherein the (a): (b) component weight ratio is from about 2.5:1 to about 3.5:1.

9. The composition of claim 5 wherein said (a) component is present in the composition in an amount of from 50 percent by weight to 70 percent by weight of the composition, said (b) component is present in the composition in an amount of from 15 percent by weight to 25 percent by weight of the composition, and said (c) component is present in the composition in an amount of from 10 percent by weight to 20 percent by weight of the composition.

10. The composition of claim 5 wherein said at least one aromatic or alicyclic compound (a) comprises a compound in accordance with Formula I:
X- ((Y)ₘ-NR₂)ₙ I
where
X is a monovalent or multivalent aromatic radical, including or not heteroatoms, or a monovalent or multivalent C₄ through C₇ non-aromatic radical , including or not heteroatoms,
each R is independently a C 1- C4 saturated or unsaturated aliphatic radical or H, provided that at least two of said Rs are H and
n is 2, 3 or 4.

11. The composition of claim 10 wherein said at least one aromatic or alicyclic compound containing at least two amine moieties comprises diaminomethylcyclohexane.

12. The composition of claim 10 wherein said at least one aromatic or alicyclic compound containing at least two amine moieties comprises 1,3-bis-diaminomethylcyclohexane.

13. The composition of claim 10 wherein said at least one aromatic or alicyclic compound containing at least two amine moieties comprises bis(aminomethyl)benzene.

14. The composition of claim 10 wherein said at least one aromatic or alicyclic compound containing at least two amine moieties comprises 1,3-bis(methylamino)benzene.

15. The composition of claim 5 wherein said east one at least one aliphatic compound (b) comprises at least one compound in accordance with Formula II: 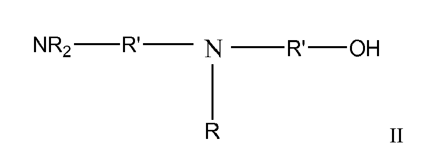 where each R is independently C1 - C4 alkyl or H and each R' is independently a C1 - C4 alkyl.
